# EUROPEAN PATENT APPLICATION

(11) **EP 2 524 901 A2**
(43) Date of publication of application: **21.11.2012**
(21) Application number: 12001849.4
(22) Date of filing: 19.03.2012
(51) Int. Cl.: C03B 13/04, C03B 25/08, C03B 32/02

(54) **Method for making crystallized glass by rolling and heat treating and apparatus**

(30) Priority: 16.05.2011 JP 2011109738
(71) Applicant: Huzhou Ta Hsiang Glass Products Co., Ltd., Huzhou, Zhejiang (CN); Ta Hsiang Containers Ind.Co., Ltd, Hsin Pu Township, Hsin-chu County 305 (TW)
(72) Inventor: Hsu, Kuo-Chuan, Hsinchu City (TW); Jiang, Yan-Bin, Zhejiang (CN); Qu, Chao, Zhejiang (CN)
(74) Representative: Schöllhorn, Andreas

(57) **Abstract**

A consecutive molding method for crystallized glass comprises: a melting process to obtain molten glass by melting glass raw materials; a molding process to obtain a band-shaped plate glass by roll forming the molten glass to become band-shaped; a crystallization process to obtain a band-shaped crystallized glass plate by conducting thermal treatment on the band-shaped plate glass to crystallize it; and a cutting process to cut the band-shaped crystallized glass plate, wherein the crystallization process includes: a crystal nucleus-formation process to form crystal nuclei in the band-shaped plate glass obtained in the molding process by disposing the band-shaped plate glass in the atmosphere of a crystal nucleus-formation temperature and retaining it at the temperature; a temperature-raising process to raise the temperature of the band-shaped plate glass where crystal nuclei have been formed to a crystal-growth temperature; a crystal-growth process to retain the band-shaped plate glass where crystal nuclei have been formed at the crystal-growth temperature such that the glass is crystallized to produce a band-shaped crystallized glass plate; and a slow-cooling process to slowly cool down the band-shaped crystallized glass plate.

## Description

### BACKGROUND OF THE INVENTION

### A. Field of the Invention

The present invention relates to a consecutive molding method for crystallized glass and a consecutive molding device thereof.

### B. Description of the Prior Art

In general, crystallized glass is produced by melting glass raw materials that contain crystal nucleus-forming components, and molding the molten glass into a plate to obtain crystalline glass, and then conducting crystallization thermal treatment on it. Met hods and devices for producing crystalline glass have been developed to improve production efficiency until now. For in stance, a consecutive molding device for crystallized glass that can conduct the following processes consecutively: melting of glass raw materials, molding, crystallization, annealing and cutting, has been disclosed (for example, see reference 1).

In a method for producing crystallized glass that conducts from melting of glass raw materials, molding, crystallization, annealing to cutting, the rate-determinating step is a process of crystallization. The rea son is that, in order to prevent from generation of wave, deformation, breakage or crack on the glass plate, during thermal treatment process for crystallization, multi-stages temperature change is required so as not to affect a glass plate by drastic temperature changes.

For instance, in the consecutive molding device disclosed in reference 1, the crystallization device includes: a heat insulating region to retain the temperature of band-shaped plate glass around a glass transition temperature; a first temperature-raising region to raise the temperature of the band-shaped plate glass to a crystal nucleus-formation temperature; a nucleus-formation region to retain the band-shaped plate glass at the crystal nucleus-formation temperature; a second temperature-raising region to raise the temperature of the band-shaped plate glass to a crystal-growth temperature; a crystal-growth region to retain the band-shaped plate glass at the crystal-growth temperature; and an annealing region to remove distortion of the band-shaped crystallized glass plate.

Reference 1: Japanese Patent Application No. 2005-41726

### SUMMERY OF THE INVENTION

In a consecutive molding method for crystallized glass, if the thermal treatment process for crystallized glass can be improved, the thermal treatment time for crystallization can be shortened and in result, the production efficiency can be improved.

One object of the invention is to provide a consecutive molding method for crystallized glass in which the thermal treatment time for crystallization of a band-shaped plate glass is shortened.

Furthermore, another object of the invention is to provide a consecutive molding device for crystallized glass where the thermal treatment region for crystallization of a band-shaped plate glass is shortened.

Regarding a consecutive molding method for crystallized glass, the inventor has found that it is possible to conduct consecutive molding for crystallized glass by initiating thermal treatment from disposing the band-shaped plate glass obtained by roll forming in a crystal nucleus-formation temperature without undergoing thermal treatment process retained around a glass transition temperature.

The detailed processes to solve the problems are described as follows.
(1) A consecutive molding method for crystallized glass that comprises: a melting process to obtain molten glass by melting glass raw materials; a molding process to obtain a band-shaped plate glass by roll forming the molten glass to become band-shaped; a crystallization process to obtain a band-shaped crystallized glass plate by conducting thermal treatment on the band-shaped plate glass to crystallize it; and a cutting process to cut the band-shaped crystallized glass plate,
   wherein the crystallization process includes: a crystal nucleus-formation process to form crystal nuclei in the band-shaped plate glass obtained in the molding process by disposing the band-shaped plate glass in the atmosphere of a crystal nucleus-formation temperature and retaining it at the temperature; a temperature-raising process to raise the temperature of the band-shaped plate glass where crystal nuclei have been formed to a crystal-growth temperature; a crystal-growth process to retain the band-shaped plate glass where crystal nuclei have been formed at the crystal-growth temperature, such that the glass is crystallized to produce a band-shaped crystallized glass plate; and a slow-cooling process to slowly cool down the band-shaped crystallized glass plate.
(2) The consecutive molding method for crystallized glass recited in the above item (1), further comprises: an adjustment process to adjust the homogeneity, viscosity and liquid surface of the molten glass obtained in the melting process; and a devitrification prevention process to prevent devitrification of the molten glass that has undergone the adjustment process, between the melting process and the molding process.
(3) A consecutive molding device for crystallized glass that comprises: a melting device to obtain molten glass by melting glass raw materials; a molding device to obtain a band-shaped plate glass by roll forming the molten glass to become band-shaped; a crystallization device to obtain a band-shaped crystallized glass plate by conducting thermal treatment on the band-shaped plate glass to crystallize it; and a cutting device to cut the band-shaped crystallized glass plate,
   wherein the crystallization device includes: a crystal nucleus-formation region to form crystal nuclei in the band-shaped plate glass obtained by the molding device, by accommodating the band-shaped plate glass in the atmosphere of a crystal nucleus-formation temperature and retaining it at the temperature; a temperature-raising region to raise the temperature of the band-shaped plate glass where crystal nuclei have been forked to a crystal-growth temperature; a crystal-growth region to retain the band-shaped plate glass where crystal nuclei have been formed at the crystal-growth temperature, such that the glass is crystallized to produce a band-shaped crystallized glass plate; a slow-cooling region to slowly cool down the band-shaped crystallized glass plate.
(4) The consecutive molding device for crystallized glass recited in the above item (3), further comprises: an adjustment device to adjust the homogeneity, viscosity and liquid surface of the molten glass obtained by the melting device; and a devitrification prevention device to prevent devitrification of the molten glass flowing out from the adjustment device, between the melting device and the molding device.

In accordance with the present invention, a consecutive molding method for crystallized glass in which the thermal treatment time for crystallization of a band-shaped plate glass is shortened, can be provided.

Furthermore, a consecutive molding device for crystallized glass in which the thermal treatment time for crystallization of a band-shaped plate glass is shortened, can be provided.

### BRIEF DESCRIPTION OF THE DRAWINGS

FIG. 1 is a schematic showing an embodiment of the consecutive molding device for crystallized glass in accordance with the present invention.

FIG. 2A and FIG 2B respectively show the graphs of the gradients of air temperature in the crystallization device in the embodiment of the consecutive molding device for crystallized glass in accordance with the present invention.

### DETAILED DESCRIPTION OF THE PREFERRED EMBODIMENTS

### <consecutive molding method for crystallized glass>

The first aspect of the invention is a consecutive molding method for crystallized glass that comprises:
a melting process to obtain molten glass by melting glass raw materials;
a molding process to obtain a band-shaped plate glass by roll forming the molten glass to become band-shaped;
a crystallization process to obtain a band-shaped crystallized glass plate by conducting thermal treatment on the band-shaped plate glass to crystallize it; and
a cutting process to cut the band-shaped crystallized glass plate,
wherein the crystallization process includes:
a crystal nucleus-formation process to form crystal nuclei in the band-shaped plate glass obtained in the molding process, by disposing the band-shaped plate glass in the atmosphere of a crystal nucleus-formation temperature and retaining it at the temperature;
a temperature-raising process to raise the temperature of the band-shaped plate glass where crystal nuclei have been formed to a crystal-growth temperature;
a crystal-growth process to retain the band-shaped plate glass where crystal nuclei have been formed at the crystal-growth temperature, such that the glass is crystallized to produce a band-shaped crystallized glass plate; and
a slow-cooling process to slowly cool down the band-shaped crystallized glass plate.

The consecutive molding method for crystallized glass in accordance with the present invention, provided with the following processes in the order of: a melting process, a molding process, a crystallization process and a cutting process, can conduct from melting of glass raw materials, molding, crystallization, annealing to cutting consecutively.

The melting process is a process to obtain molten glass by heating glass raw materials to melt the same. The hea ting temperature is not particularly limited as long as it is the temperature under which glass raw materials can be melted. The melting process may include preparation of glass raw materials before melting glass raw materials. F rom the viewpoint of production efficiency, it is preferable to conduct from preparation of glass raw materials to melting the same consecutively.

The molding process is a process to obtain a band-shaped plate glass by roll forming the molten glass to become band-shaped. The roll forming method may be a conventionally used method. For example, the roll-out method which conducts roll forming on molten glass by a pair of rollers, can be applied.

The crystallization process is a process to obtain a band-shaped crystallized glass plate by conducting thermal treatment on the band-shaped plate glass to crystallize it. The crystallization process will be described in more detail later.

The cutting process is a process to cut the band-shaped crystallized glass plate in a prescribed length. The cu tting method may be a conventionally used method. For example, cutting methods with a cutter made of diamond or water jet are applicable.

The crystallization process includes: a crystal nucleus-formation process to form crystal nuclei in the band-shaped plate glass obtained in the molding process, by disposing the band-shaped plate glass in the atmosphere of a crystal nucleus-formation temperature and retaining it at the temperature; a temperature-raising process to raise the temperature of the band-shaped plate glass where crystal nuclei have been formed to a crystal-growth temperature; a crystal-growth process to retain the band-shaped plate glass where crystal nuclei have been formed at the crystal-growth temperature, such that the glass is crystallized to produce a band-shaped crystallized glass plate; and a slow-cooling process to slowly cool down the band-shaped crystallized glass plate.

The crystallization process starts the thermal treatment for crystallizing the band-shaped plate glass from disposing it in the atmosphere of a crystal nucleus-formation temperature. In other words, the present invention does not include a thermal treatment process to retain around a glass transition temperature, which is included in conventional consecutive molding methods.

In addition," around glass transition temperature" signifies the range of ±10°C of a glass transition temperature.

The crystal nucleus-formation process is a process to form crystal nuclei in the band-shaped plate glass obtained in the molding process, by directly disposing the band-shaped plate glass in the atmosphere of a crystal nucleus-formation temperature and retaining it at the temperature. Conc eming the band-shaped plate glass disposed in the atmosphere of a crystal nucleus-formation temperature, its temperature is raised consecutively from the temperature when it is between the molding process and the crystallization process, to a crystal nucleus-formation temperature, and retained at the crystal nucleus-formation temperature to form crystal nuclei.

The crystal nucleus-formation temperature can be any temperature as long as it is possible to form crystal nuclei. Appr opriate temperature for it can be selected according to glass composition. Depen ding on the glass composition, formation of crystal nuclei and growth of crystals may occur at the same time and yet, growth of crystals at the crystal nucleus-formation temperature is also allowed.

Preferably, the crystal nucleus-formation temperature is almost constant

The retention temperature and the retention time in the crystal nucleus-formation process are not particularly limited, and a condition that allows desired crystal nuclei to form sufficiently, can be selected properly. It is preferable to set the retention temperature in the crystal nucleus-formation process at, or around the crystal nucleus-formation temperature in the conventional manufacturing method for crystallized glass. The retention temperature is usually 600°C-1000°C, preferably 650°C-900°C, even preferably 700°C-850°C, and it is recommended to keep the temperature almost constant (within ±5°C).

The retention time in the crystal nucleus-formation process can be the time for crystal nucleus-formation in the conventional production method for crystallized glass. The retention time is usually about 10 minutes∼3 hours.

The formation of crystal nuclei can be easily carried out by adding nucleus formation components (such as TiO₂, ZrO₂, P₂O₅, F₂) into glass raw materials in advance.

The temperature-raising process is a process to raise the air temperature around the band-shaped plate glass from, the temperature crystal nuclei can be formed, to the temperature crystals can be grown. In the temperature-raising process, the temperature gradient of raising temperature is not particularly limited, and can be selected according to glass composition and size of band-shaped plate glass. For example, it is recommended to raise the temperature at a rate of 0.5°C/minute-10°C/minute. Natura 11y, as the rate of raising the temperature becomes slow, wave, deformation, breakage or crack are hardly to occur in the band-shaped plate glass.

The crystal-growth process is a process to retain the air temperature around the band-shaped plate glass at the temperature that is possible to grow crystals (favorably, almost constant temperature), such that the glass is crystallized to produce a band-shaped crystallized glass plate.

The retention temperature and the retention time in the process are not particularly limited, and a condition that allows desired crystals to grow sufficiently, can be selected properly. It is recommended to set the retention temperature in the process at, or around the crystal-growth temperature in the conventional manufacturing method for crystallized glass. Th e retention temperature in the process is usually 750°C-1100°C, preferably 800°C -1000°C, even preferably 850°C-950°C and it is recommended to keep the temperature almost constant (within ±5°C).

The retention time in the process can be the time for growing crystals in the conventional manufacturing method of crystallized glass. The retention time is usually about 10 minutes∼3 hours.

The slow-cooling process is a process to slowly cool down a band-shaped crystallized glass plate in order to make the glass homogeneous as well as remove residual strain in the band-shaped crystallized glass plate. In this invention, by the way, "slow-cooling" signifies that the cooling rate is sufficiently slow such that distortion can be removed. In the slow-cooling process, the temperature gradient of cooling is not particularly limited, and can be selected according to glass composition or size of band-shaped plate glass. For example, it is recommended to cool down at a rate of reducing temperature of 0.5°C/minute∼20°C/minute. Naturally, as the rate becomes slower, the residual strain becomes little.

In this invention, the band-shaped plate glass obtained by roll forming is directly disposed in a crystal nucleus-formation temperature without undergoing a thermal treatment process, which process retains the band-shaped plate glass around glass transition temperature and is considered as necessary in the conventional consecutive molding method for crystallized glass. Therefore, it is possible to shorten the whole treatment time in the crystallization process and also possible to lengthen the time taken for the temperature-raising process and the slow-cooling process without extending the whole treatment time in the crystallization process. If the time taken for the temperature-raising process becomes longer, the temperature gradient of raising temperature can become gentle. As a result, the resulting band-shaped plate glass is hardly to generate wave, deformation, breakage or crack and therefore, it is favorable. In ad dition, if the time taken for the slow-cooling process becomes longer, the temperature gradient of slow-cooling become gentle or can include multiple stages. As a result, distortion of the band-shaped crystallized glass plate where crystals have been formed, can be removed well and therefore it is favorable. Accor dingly, the present invention is favorable because the crystallized glass obtained has the advantages of excellent evenness and impact strength.

Preferably, the consecutive molding method for crystallized glass in accordance with the present invention further includes: an adjustment process between the melting process and the molding process to adjust the homogeneity, viscosity and liquid surface of the molten glass obtained in the melting process; and a devitrification prevention process to prevent the devitrification of the molten glass which has undergone the adjustment process.

By including the adjustment process and the devitrification prevention process, the present invention can make the molten glass homogeneous and control the viscosity of it and prevent it from devitrification and furthermore supply it to the molding process at a constant flowing speed.

The adjustment process is composed of three steps: the step of making the molten glass homogeneous by stirring, the step of controlling the viscosity of the molten glass by heating, and the step of controlling the liquid surface of the molten glass. It i s possible to control the liquid surface of the molten glass by detecting the height of liquid surface of the molten glass introduced from the melting process into the adjustment process, and feeding back the signal corresponding to the amount of change of the liquid surface height to the glass raw material injection device, and adjusting the amount of raw materials injected into the melting device.

Preferably, the devitrification prevention process is composed of two steps: the step of heat insulating the molten glass and the step of heating the molten glass. The heat insulation and heating allow the molten glass to retain at a prescribed temperature before being introduced into the molding process and prevent the devitrification of the molten glass.

For the crystallized glass obtained by undergoing the processes explained above, a grinding step to grind the surface for adjusting the thickness or finishing the surface and the like, and a processing step to form a prescribed size or shape can also be carried out depending on our necessity.

For the consecutive molding method for crystallized glass in accordance with the present invention, a consecutive molding device for crystallized glass in accordance with the present invention, described as follows, is favorable.

### <consecutive molding device for crystallized glass>

The second aspect of the invention is a consecutive molding device for crystallized glass that comprises:
a melting device to obtain molten glass by melting glass raw materials;
a molding device to obtain a band-shaped plate glass by roll forming the molten glass to become band-shaped;
a crystallization device to obtain a band-shaped crystallized glass plate by conducting thermal treatment on the band-shaped plate glass to crystallize it; and
a cutting device to cut the band-shaped crystallized glass plate,
wherein the crystallization device includes:
a crystal nucleus-formation region to form crystal nuclei in the band-shaped plate glass obtained by the molding device, by accommodating the band-shaped plate glass in the atmosphere of a crystal nucleus-formation temperature and retaining it at the temperature;
a temperature-raising region to raise the temperature of the band-shaped plate glass where crystal nuclei have been formed to a crystal-growth temperature;
a crystal-growth region to retain the band-shaped plate glass where crystal nuclei have been formed at the crystal-growth temperature, such that the glass is crystallized to produce a band-shaped crystallized glass plate; and
a slow-cooling region to slowly cool down the band-shaped crystallized glass plate.

The consecutive molding device for crystallized glass in accordance with the present invention, provided with the following devices in this order: the melting device, the molding device, the crystallization device and the cutting device, can conduct the following steps consecutively: the melting of glass raw materials, molding, crystallization, annealing and cutting.

The melting device is a device to obtain molten glass by heating glass raw materials to melt the same. The melting device can be a furnace having a heating means for melting glass raw materials. A ny conventionally known glass melting furnace is applicable. The melting device may include a preparation means to prepare glass raw materials as a previous step of the heating means for melting glass raw materials.

The molding device is a device to roll form the molten glass to become band-shaped, such that a band-shaped plate glass can be obtained. In the molding device, the roll forming process is not particularly limited. Fo r example, a pair of rollers can be utilized for conducting roll-out method to perform roll forming process.

The crystallization device is a device to conduct thermal treatment on the band-shaped plate glass and to crystallize it such that a band-shaped crystallized glass plate can be obtained. The crystallization device will be described in more detail later.

The cutting device is a device to cut the band-shaped crystallized glass plate in a prescribed length. In the cutting device, any conventionally used cutting process can be used. For ex ample, a cutter made of diamond or water jet can be utilized to conduct the cutting process.

The crystallization device includes: a crystal nucleus-formation region to form crystal nuclei in the band-shaped plate glass obtained by the molding device, by accommodating the band-shaped plate glass in the atmosphere of a crystal nucleus-formation temperature and retaining it at the temperature; a temperature-raising region to raise the temperature of the band-shaped plate glass where crystal nuclei have been formed to a crystal-growth temperature; a crystal-growth region to retain the band-shaped plate glass where crystal nuclei have been formed at the crystal-growth temperature, such that the glass is crystallized to produce a band-shaped crystallized glass plate; and a slow-cooling region to slowly cool down the band-shaped crystallized glass plate.

The crystallization device has the crystal nucleus-formation region at the top and does not have a thermal treatment region to retain around glass transition temperature that conventional consecutive molding devices have.

The crystal nucleus-formation region is a region where the band-shaped plate glass obtained by the molding device is accommodated in the atmosphere of a crystal nucleus-formation temperature and is retained at the temperature such that crystal nuclei are formed in the band-shaped plate glass. When passing the crystal nucleus-formation region, the band-shaped plate glass accommodated in the region will be adjusted consecutively, from the temperature at which the glass has been between the molding device and the crystallization device, to the crystal nucleus-formation temperature, and retained at the crystal nucleus-formation temperature, such that crystal nuclei can be formed.

The crystal nucleus-formation temperature can be any temperature as long as crystal nuclei can be formed. Approp riate temperature for it can be selected according to glass composition. Depe nding on glass composition, the formation of crystal nuclei and the growth of crystals may occur at the same time for the band-shaped plate glass, and yet, the growth of crystals in the crystal nucleus-formation region is allowed as well.

Preferably, the temperature of the crystal nucleus-formation region is kept almost constant

The air temperature of the crystal nucleus-formation region is not particularly limited, and the temperature that allows desired crystal nuclei to form sufficiently can be chosen properly. It is preferable to set the air temperature of the crystal nucleus-formation region at or around the crystal nucleus-formation temperature in the conventional manufacturing method for crystallized glass. The air temperature is usually 600°C-1000°C, preferably 650°C-900°C, even preferably 700°C-850°C and it is recommended to keep the temperature almost constant (within +5°C).

The length of the crystal nucleus-formation region and the conveyance rate of the band-shaped plate glass inside the region are not particularly limited. Appropriate conditions can be chosen so as to secure time to form desired crystal nuclei sufficiently. The time concerned is about the same as that for forming crystal nuclei in the conventional manufacturing method for crystallized glass. It is usually about 10 minutes∼3 hours.

Furthermore, the conveyance rate of the band-shaped plate glass inside the crystal nucleus-formation region can be chosen properly according to the handling amount of the melting device and/or the molding device. When the conveyance rate of the band-shaped plate glass inside the crystal nucleus-formation region is slow, the length of the crystal nucleus-formation region can be short, accordingly. On the other hand, when it is fast, the length of the region can be long, accordingly.

The temperature-raising region is a region where the air temperature around the band-shaped plate glass is raised from the temperature at which a crystal nucleus can be formed to the temperature at which crystal can be grown. Preferably, inside the temperature raising region, a prescribed temperature gradient is assigned and the temperature will be gently raised as the band-shaped plate glass is conveyed towards the direction of outlet of the crystallization device. In the temperature-raising region, the temperature gradient of the region is not particularly limited and can be chosen according to the glass composition or size of the band-shaped plate glass. Nat urally, as the temperature gradient becomes gentle, the band-shaped plate glass is unlikely to have wave, deformation, breakage or crack.

The crystal-growth region is a region where the air temperature inside is retained at the temperature that allows a crystal to grow (preferably, almost constant). The band-shaped plate glass becomes a band-shaped crystallized glass plate by growing crystals while it is passing the crystal-growth region. The air temperature in the crystal-growth region is not particularly limited, and the temperature that allows desired crystals to grow sufficiently can be chosen properly. Preferably the air temperature in the region is set at or around the crystal-growth temperature in the conventional manufacturing method for crystallized glass. The air temperature is usually 750°C-1100°C, preferably 800°C-1000°C, even preferably 850°C-950°C and it is recommended to keep the temperature almost constant (within ±5°C).

The length of the crystal -growth region and the conveyance rate of band-shaped plate glass inside the region are not particularly limited. Appropriate condition can be chosen so as to secure time to grow desired crystals sufficiently. The ti me concerned may be the same as that for growing crystals in the conventional manufacturing method for crystallized glass and it is usually about 10 minutes-3 hours.

Furthermore, the conveyance rate of band-shaped plate glass inside the crystal-growth region can be chosen properly according to the handling amount of the melting device and/or the molding device. When the conveyance rate of band-shaped plate glass inside the crystal-growth region is slow, the length of the crystal-growth region can be short, accordingly. On the other hand, the length of the region can be long when it is fast, accordingly.

The slow-cooling region is a region to slowly cool down a band-shaped crystallized glass plate for removing residual strain from the band-shaped crystallized glass plate as well as making the glass homogeneous. In the slow-cooling region, the temperature gradient inside the region is not particularly limited and may be chosen according to the glass composition or size of the band-shaped plate glass. Naturally, as the temperature gradient becomes gentle, the residual strain becomes less.

The present invention does not have a thermal treatment region to retain the band-shaped plate glass around glass transition temperature which is regarded as necessary for a conventional consecutive molding device for crystallized glass, and the band-shaped plate glass drawn out of the molding device is directly accommodated into a crystal nucleus-formation temperature. Therefore, it is possible to shorten the whole length of the crystallization device and also possible to lengthen the temperature-raising region and the slow-cooling region without extending the whole length of the crystallization device. If he temperature-raising region becomes longer, the temperature gradient of raising temperature may become gentle. As a result, it is favorable that wave, deformation, breakage or crack in the band-shaped plate glass is hardly generated. If the slow-cooling region becomes longer, the temperature gradient of slow-cooling may become gentle or include multiple stages. As a result, it is favorable that distortion can be removed sufficiently from the band-shaped crystallized glass plate where crystals have been formed. Therefore , the present invention is favorable in having excellent impact strength in the obtained crystallized glass.

Preferably, the consecutive molding device in accordance with the present invention further includes: an adjustment device between the melting device and the molding device to adjust the homogeneity, viscosity and liquid surface of the molten glass obtained by the melting device; and a devitrification prevention device to prevent the devitrification of the molten glass flowing out from the adjustment device.

The present invention, provided with the adjustment device and the devitrification prevention device, can make the molten glass homogeneous, control the viscosity and prevent the devitrification of the molten glass, and supply the molten glass to the molding device at a prescribed flowing speed.

The adjustment device is composed of a homogenizing unit to make molten glass homogeneous, a viscosity control unit to control the viscosity of molten glass and a liquid surface control unit to control the liquid surface of molten glass. The homogenizing unit includes a device to stir molten glass. The viscosity control unit includes a heating device to heat molten glass. The liquid surface control unit adjusts the amount of raw materials injected into the melting device by detecting the height of liquid surface of the molten glass introduced from the melting device into the adjustment device, and feeding back the signal corresponding to the amount of change of the liquid surface height, to the glass raw material injection device. By the liquid surface control unit, it is possible to measure the height of the liquid surface of the molten glass that passes the adjustment device and adjust the amount of raw materials injected. Theref ore, it is possible to control that the band-shaped plate glass obtained from the molding device has a prescribed thickness.

Consequently, it is easy to accomplish the stabilization of quality and conduct process management, as well as to achieve the manufacture automation and mass-production of crystallized glass.

Preferably, the devitrification prevention device is composed of a heat insulating device to keep molten glass warm, and a heating device to heat molten glass. The heat insulation by means of the heat insulating device and the heating by means of the heating device allow the molten glass to retain at a prescribed temperature before being introduced into the molding device and prevent the devitrification of the molten glass.

Furthermore, the consecutive molding device for crystallized glass in accordance with the present invention preferably includes a press roller between the molding device and the crystallization device to press the band-shaped plate glass which is taken out of the molding device. The surface of the band-shaped plate glass taken out of the molding device is formed into a flat rolled surface by the press roll. By inclu ding the press roll, the band-shaped plate glass obtained from the molding device can be flattened and then introduced into the crystallization device.

The consecutive molding device for crystallized glass in accordance with the present invention is favorable as a manufacturing device for crystallized glass, which is obtained by consecutively molding process from glass raw materials. The crystallized glass is used generally as substrates for high-tech products like color filter or image sensor, setters for baking electronic parts, surface materials for electromagnetic cookers, optical components, shelves for microwave ovens, windowpane for fire doors, front windows of oil heaters or wood stoves, building materials and so on.

The embodiment of the consecutive molding device for crystallized glass in accordance with the present invention is described below referring to the accompanying drawings. However , the present invention is not limited to the specific embodiment.

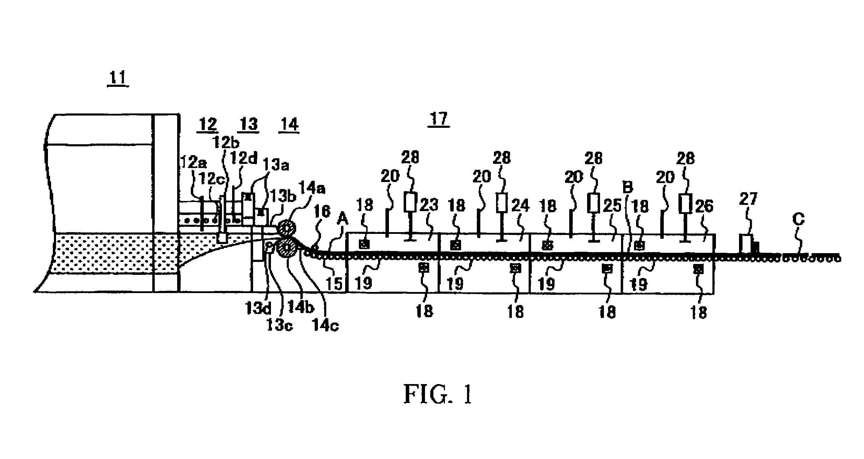

The consecutive molding device shown in FIG 1 includes a melting device 11, an adjustment device 12, a devitrification prevention device 13, a roll-out molding device 14, a crystallization device 17 (roller hearth kiln 17) and a cutting device 27.

The melting device 11 is a device for melting glass raw materials to produce molten glass. It can b e an intermittent furnace having the functions of melting, clarifying and homogenizing glass raw materials, or a combinational furnace composed of several units connected together each achieving one of the aforementioned functions.

Molten glass obtained from the melting device 11 is carried to the adjustment device 12 disposed downstream in the conveyance direction. The adjustment device 12 is a device to adjust the homogeneity, viscosity, and liquid surface height of the molten glass. A liquid surface control unit 12a, a stirrer 12b (a stirring bar 12b), a heating element 12c and a thermocouple 12d are installed in the adjustment device 12.

The liquid surface control unit 12a detects the height of a liquid surface of the molten glass, and feeds back signals corresponding to the amount of change of the height of the liquid surface to the glass raw material injection device (not shown in the figure) which injects glass raw materials to the melting device 11, and adjusts the amount of glass raw materials injected. In this way, the height of the liquid surface in the adjustment device 12 can be adjusted to a prescribed value.

The stirrer 12b makes the molten glass homogeneous by stirring it. The heating element 12c and the thermocouple 12d adjust the viscosity of the molten glass to a prescribed value by adjusting the temperature of the molten glass.

The molten glass flowing out of the adjustment device 12 flows into the devitrification prevention device 13 disposed downstream in the conveyance direction. A heat insulating device 13a (a heat insulating refractory 13a), a lip 13b and a supporter 13c are installed in the devitrification prevention device 13. The heat insulating device 13a retains the molten glass at a prescribed temperature by heat insulation. The lip 13b leads the molten glass to the roll-out molding device 14. The supporter 13c is for supporting the lip 13b. Furt hermore, a heating unit 13d can be optionally installed in the devitrification prevention device 13. The heating unit 13d is a heating device provided by penetrating the supporter 13c. The lip 13b and the supporter 13c can be heated by the heating unit 13d.

The devitrification prevention device 13 prevents the devitrification of the molten glass by retaining the molten glass at a prescribed temperature before being introduced into the roll-out molding device 14 by heat insulation of the heat insulating device 13a. In the c ase that the heating unit 13d is installed in the devitrification prevention device 13, the heating by the heating unit 13d also contributes to prevent the devitrification of the molten glass.

The molten glass which has flowed out of the adjustment device 12 and passed the devitrification prevention device 13, is supplied to the roll-out molding device 14 disposed downstream in the conveyance direction. The ro 11-out molding device 14 molds the molten glass into band-shaped plate glass by roll forming. An upper roller 14a, a lower roller 14b and a cooling water box 14c are installed in the roll-out molding device 14. A commercially available roller can be used as the upper roller 14a and the lower roller 14b, which are made from materials with excellent heat resistance, heat shock resistance, high temperature strength and heat cracking resistance.

The upper roller 14a and the lower roller 14b are disposed opposite to each other, and the molten glass supplied between the pair of rollers is molded into band-shaped by roll forming. The cooling water box 14c is continuously supplied with water for cooling the molten glass. The molded band-shaped glass is cooled such that its band-shape can be maintained.

The glass molded to become band-shaped by the roll-out molding device 14 is loaded on a conveyor 15 disposed downstream in the conveyance direction. The conveyor 15 is composed of a plurality of rollers in alignment and conveys the band-shaped plate glass which is molded by rolling. Be sides the rollers, the conveyor 15 can be composed of another means which can convey the band-shaped plate glass, such as a heat resisting belt.

A press roller 16 which presses the band-shaped plate glass roll formed by the roll-out molding device 14, is installed upstream in the conveyance direction, over the conveyor 15. The press roller 16 is composed of a single roller or a plurality of rollers made of excellent heat resisting steel. The glass roll formed to be band-shaped by the roll-out molding device 14 is pressed by the press roller 16 to become flat band-shaped plate glass A. Besi des, depending on the condition of the surface of the band-shaped plate glass roll formed by the roll-out molding device 14, the press roller 16 can be omitted in some occasion.

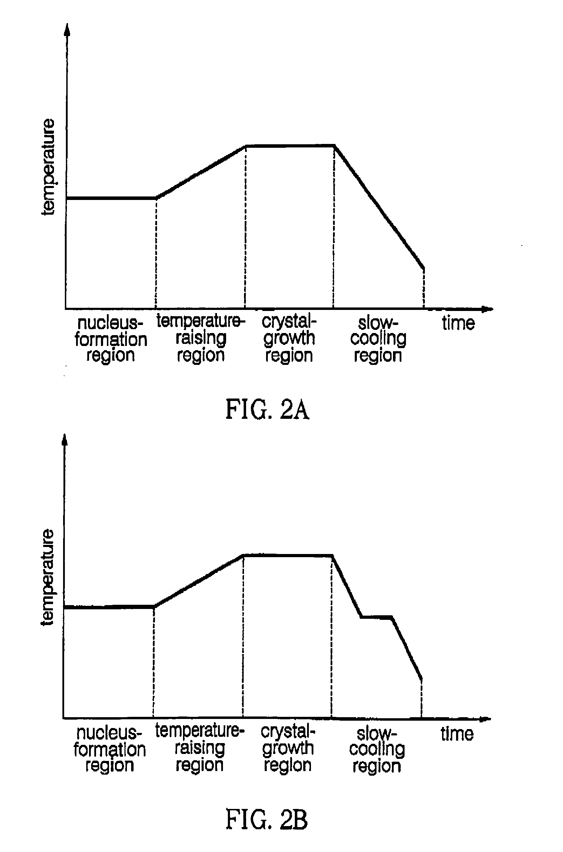

The band-shaped plate glass A is carried and introduced into the crystallization device 17 by the conveyor 15. In t urn from the upper stream in the conveyance direction, the crystallization device 17 is composed of: a crystal nucleus-formation region 23 to form crystal nuclei by retaining the band-shaped plate glass A at crystal nucleus-formation temperature; a temperature-raising region 24 to raise the air temperature from the crystal nucleus-formation temperature to a crystal-growth temperature; a crystal-growth region 25 to grow crystals to form a band-shaped crystallized glass plate B by retaining the band-shaped plate glass A at the crystal-growth temperature; and a slow-cooling region 26 to slowly cool down the band-shaped crystallized glass plate B. The air temperatures of the crystal-nucleus formation region 23, the temperature-raising region 24, the crystal-growth region 25 and the slow-cooling region 26 are controlled to have, for example, the temperature gradient shown in FIG 2A or FIG 2B. The temperature gradient shown in FIG 2A is set so that the temperature gradient of slow-cooling region is relatively gentle. The temperature gradient shown in FIG 2B is set so that the temperature gradient of slow-cooling region consists of rapid cooling stage, heat insulation stage and rapid cooling stage.

The crystallization device 17 is the roller hearth kiln that is commercially available, wherein a heating unit 18, a conveyance roller 19, a thermocouple 20, and a stirrer 28 are installed.

In the crystal nucleus-formation region 23, the temperature-raising region 24, the crystal-growth region 25 and the slow-cooling region 26, one or a plurality of heating units 18 are placed on the sidewalls of the furnaces above and below the conveyance roller 19. Each hea ting unit 18 is provided with a thermocouple 20 so as to control the temperature with the accuracy within ±5°C. The st irrer 28 stirs the air inside each region to makes the temperature thereof homogeneous. Consequently, the crystallization thermal treatment can be surely conducted and the crystallization of roll formed band-shaped plate glass can be conducted easily and surely. Further more, a heating source, such as SiC heating element, kanthal heater, gas and electricity, may be chosen properly according to the desired temperature.

The conveyance roller 19 is composed of a heat resisting roller and conveys the band-shaped plate glass continuously into the crystallization device 17 without stagnation.

The crystal nucleus-formation region 23 is retained at a prescribed temperature, and crystal nuclei are formed in the band-shaped plate glass A at the region 23.

The temperature-raising region 24 is a region to raise the temperature of the band-shaped plate glass A where crystal nuclei have been formed, to the crystal-growth temperature. In the region 24, for example, the temperature gradients as shown in FIG. 2A and FIG 2B are set and the temperature of the band-shaped plate glass A is raised gradually as the plate glass A is carried towards the exit direction of the crystallization device 17.

The crystal-growth region 25 is a region to retain the band-shaped plate glass A at a temperature where crystals can grow, and the plate glass A is crystallized to produce a band-shaped crystallized glass plate B.

The slow-cooling region 26 is a region to slowly cool down the band-shaped crystallized glass plate B in order to remove residual strain from the glass plate B as well as make the glass homogeneous. In the slow-cooling region 26, for example, the temperature gradients as shown in FIG 2A and FIG 2B are set, and the band-shaped crystallized glass plate B is cooled gradually as it is carried toward the exit direction of the crystallization device 17.

The band-shaped crystallized glass plate B obtained by crystallizing the band-shaped plate glass A by means of the crystallization device 17 is conveyed to the cutting device 27 disposed downstream in the conveyance direction. The cutting device 27 cuts the band-shaped crystallized glass plate B in a prescribed size. A crystallized glass plate C obtained by cutting by means of the cutting device 27 is transported to a secondary processing factory to produce finished products by secondary processing.

### [EMBODIMENTS]

The following embodiments are provided to further clarify the present invention, but not to limit the scope of the present invention.

The impact strength of the crystallized glass plates obtained in the following examples and comparative example was evaluated by calculating the failure rate (%) by the following method, using the device for impact test recited in "impact tester of spring driving and its calibration" published No. 817, by International Electrotechnical Commission.

By using the device for impact test of 0.5J, five points on the surface of the crystallized glass plate cut into the size of 30cm×30cm×4mm were given impact three times, respectively. The resu It was considered as passing if there was no breakage or crack. On th e other hand, it was considered as failure if there was breakage or crack. The failure rate (%) was defined as the ratio of failure (the number of failures over the total sheets of glass used in the test.).

The following two embodiments were conducted using a device which has the same components as the consecutive molding device shown in FIG 1. A comparative example was conducted using a device which has the same components as the consecutive molding device disclosed by reference 1. Temperatures in the crystallization processes of the two embodiments and the comparative example is the air temperature inside the regions of the crystallization device.

### [Embodiment 1]

A glass raw material composed of SiO₂ 63.5%, Al₂O₃ 21.5%, MgO 0.5%, ZnO 1.5%, BaO 1.8%, TiO₂ 2.8%, ZrO₂ 1.5%, B₂O₃ 0.3%, P₂O₅ 1.0%, Na₂O 0.7%, K₂O 0.5%, Li₂O 3.6%, As₂O₃ 0.5%, V₂O₅ 0.3% by mass present, was prepared and put in a melting device. The glass raw material was melted at 1670°C and then, roll formed into 170cm×250m×4mm by a molding device to produce a band-shaped plate glass.

The band-shaped plate glass obtained above was carried from the molding device to a crystallization device and disposed in a crystal nucleus-formation region with temperature 730°C. The band-shaped plate glass was conveyed inside the region with its temperature being retained at 730°C for 20 minutes, such that crystal nuclei were formed in the band-shaped plate glass.

Then, the band-shaped plate glass with crystal nuclei formed therein was carried through a temperature-raising region such that its temperature was raised at a rate of 5°C/minute until 880°C.

Then, the band-shaped plate glass with crystal nuclei formed therein was introduced into a crystal-growth region with temperature 880°C. The band-shaped plate glass was conveyed inside the region with its temperature being retained at 880°C for 30 minutes, such that crystals were grown therein to produce a band-shaped crystallized glass plate.

Then, the band-shaped crystallized glass plate was carried through a slow-cooling region such that it was slowly cooled down at a rate of 5°C/minute until 100°C .

Then, the band-shaped crystallized glass plate was cut into a length of 100 cm in the conveyance direction by a cutting device.

Finally, a black crystallized glass plate with a β-quartz mixed crystal precipitated as a main crystal was obtained. The crystall ized glass plate did not have any wave, deformation, breakage or crack, and had a flat and beautiful appearance. The failure rate thereof was 5% or less.

### [Embodiment 2]

A glass raw material composed of SiO₂ 64.0%, Al₂O₃ 22.0%, MgO 0.5%, ZnO 1.0%, BaO 2.0%, TiO₂ 2.5%, ZrO₂ 1.5%, B₂O₃ 0.3%, P₂O₅ 0.8%, Na₂O 0.8%, K₂O 0.3%, Li₂O 3.8%, As₂O₃ 0.5% by mass present, was prepared and put in a melting device. The glass raw material was melted at 1650°C and then, roll formed into 170cm×250m×4mm by a molding device to produce a band-shaped plate glass.

The band-shaped plate glass obtained above was carried from the molding device to a crystallization device and put in a crystal nucleus-formation region with temperature 750°C. The band-shaped plate glass was conveyed inside the region with its temperature being retained at 750°C for 20 minutes, such that crystal nuclei were formed in the band-shaped plate glass.

Then, the band-shaped plate glass with crystal nuclei formed therein was carried through a temperature-raising region such that its temperature was raised at a rate of 5°C/minute until 1000°C.

Then, the band-shaped plate glass with crystal nuclei formed therein was introduced into a crystal-growth region with temperature 1000°C . The band-shaped plate glass was conveyed inside the region with its temperature being retained at 1000°C for 30 minutes, such that crystals were grown therein to produce a band-shaped crystallized glass plate.

Then, the band-shaped crystallized glass plate was carried through a slow-cooling region such that it was slowly cooled down at a rate of 5°C/minute until 100°C .

Then, the band-shaped crystallized glass plate was cut into a length of 100 cm in the conveyance direction by a cutting device.

Finally, a white crystallized glass plate with β-spodumenc precipitated as a main crystal was obtained. The crystallized glass plate did not have any wave, deformation, breakage or crack, and had a flat and beautiful appearance. The failure rate thereof was 5% or less.

### [Comparative Example 1]

A glass raw material composed of SiO₂ 63.5%, Al₂O₃ 21.5%, MgO 0.5%, ZnO 1.5%, BaO 1.8%, TiO₂ 2.8%, ZrO₂ 1.5%, B₂O₃ 0.3%, P₂O₅ 1.0%, Na₂O 0.7%, K₂O 0.5%, Li₂O 3.6%, As₂O₃ 0.5%, V₂O₅ 0.3% by mass present, was prepared and put in a melting device. The glass raw material was melted at 1670°C and then, roll formed into 170cm×250cm×4mm by a molding device to produce a band-shaped plate glass.

The band-shaped plate glass obtained above was carried from the molding device to a crystallization device and put in a heat insulating region with temperature 600°C . The band-shaped plate glass was conveyed inside the region with its temperature being retained at 600°C, around the glass transition temperature, for 10 minutes.

Then, the band-shaped plate glass was carried through a first temperature-raising region such that its temperature was raised at a rate of 10°C/minute until 730°C .

Then, the band-shaped plate glass was disposed in a crystal nucleus-formation region with temperature 730°C. The band-shaped plate glass was conveyed inside the region with its temperature being retained at 730°C for 20 minutes, such that crystal nuclei were formed in the band-shaped plate glass.

Then, the band-shaped plate glass with crystal nuclei formed therein was carried through a second temperature-raising region such that its temperature was raised up to 880°C at a rate of 5°C/min.

Then, the band-shaped plate glass with crystal nuclei formed therein was introduced into a crystal-growth region with temperature 880°C. The band-shaped plate glass was conveyed inside the region with its temperature being retained at 880°C for 30 minutes, such that crystals were grown therein to produce a band-shaped crystallized glass plate.

Then, the band-shaped crystallized glass plate was carried through a slow-cooling region such that it was slowly cooled down at a rate of 5°C/minute until 100°C .

Then, the band-shaped crystallized glass plate was cut into a length of 100 cm in the conveyance direction by a cutting device.

Finally, a black crystallized glass plate with a β-quartz mixed crystal precipitated as a main crystal was obtained. The crystall ized glass plate did not have any wave, deformation, breakage or crack, and had a flat and beautiful appearance. The fa ilure rate thereof was 5% or less.

## Claims

1. A consecutive molding method for crystallized glass, comprising:
a melting process to obtain molten glass by melting glass raw materials;
a molding process to obtain a band-shaped plate glass by roll forming the molten glass to become band-shaped;
a crystallization process to obtain a band-shaped crystallized glass plate by conducting thermal treatment on the band-shaped plate glass to crystallize it; and
a cutting process to cut the band-shaped crystallized glass plate,
wherein the crystallization process includes:
a crystal nucleus-formation process to form crystal nuclei in the band-shaped plate glass obtained in the molding process, by disposing the band-shaped plate glass in the atmosphere of a crystal nucleus-formation temperature and retaining it at the temperature;
a temperature-raising process to raise the temperature of the band-shaped plate glass where crystal nuclei have been formed to a crystal-growth temperature;
a crystal-growth process to retain the band-shaped plate glass where crystal nuclei have been formed at the crystal-growth temperature, such that the glass is crystallized to produce a band-shaped crystallized glass plate; and
a slow-cooling process to slowly cool down the band-shaped crystallized glass plate.

2. The consecutive molding method for crystallized glass of Claim 1, further comprising:
an adjustment process to adjust the homogeneity, viscosity and liquid surface of the molten glass obtained in the melting process; and
a devitrification prevention process to prevent devitrification of the molten glass that has undergone the adjustment process,
between the melting process and the molding process.

3. A consecutive molding device for crystallized glass, comprising:
a melting device to obtain molten glass by melting glass raw materials;
a molding device to obtain a band-shaped plate glass by roll forming the molten glass to become band-shaped;
a crystallization device to obtain a band-shaped crystallized glass plate by conducting thermal treatment on the band-shaped plate glass to crystallize it; and
a cutting device to cut the band-shaped crystallized glass plate,
wherein the crystallization device includes:
a crystal nucleus-formation region to form crystal nuclei in the band-shaped plate glass obtained by the molding device, by accommodating the band-shaped plate glass in the atmosphere of a crystal nucleus-formation temperature and retaining it at the temperature;
a temperature-raising region to raise the temperature of the band-shaped plate glass where crystal nuclei have been formed to a crystal-growth temperature;
a crystal-growth region to retain the band-shaped plate glass where crystal nuclei have been formed at the crystal-growth temperature, such that the glass is crystallized to produce a band-shaped crystallized glass plate; and
a slow-cooling region to slowly cool down the band-shaped crystallized glass plate.

4. The consecutive molding device for crystallized glass of Claim 3, further comprising:
an adjustment device to adjust the homogeneity, viscosity and liquid surface of the molten glass obtained by the melting device; and
a devitrification prevention device to prevent devitrification of the molten glass flowing out from the adjustment device,
between the melting device and the molding device.
